# EUROPEAN PATENT APPLICATION

(11) **EP 2 393 231 A2**
(43) Date of publication of application: **07.12.2011**
(21) Application number: 11168655.6
(22) Date of filing: 03.06.2011
(51) Int. Cl.: H04L 1/16

(54) **Acknowledgement of communications using shared messages**

(30) Priority: 03.06.2010 US 350950 P
(71) Applicant: Essence Security International Ltd., 46120 Herzlia (IL)
(72) Inventor: Guttman, Ofer, 42935 Doar-Na Emek Hefer (IL); Cohen, Omri, 69026 Tel-Aviv (IL); Yeruhami, Oded, 64582 Te-Aviv (IL)
(74) Representative: Dennemeyer, John James

(57) **Abstract**

In a communication system with receipt acknowledgements, a method for a receiving communication node to acknowledge receipt of a message from a sending communication node, including the receiving node embedding the acknowledgement in a message which the receiving node produces for a purpose which is more than just acknowledgement of receipt of the message, and the receiving node transmitting the message. A communication node including a message receiver for receiving messages, an acknowledgement generator for producing acknowledgements to at least some of the received messages, a message generator for producing messages for transmission, in which the receiving communication node embeds at least one of the acknowledgements in a message for transmission which the message generator produces for a purpose which is other than just acknowledgement. In a communication system with synchronization messages, a method for a receiving communication node to acknowledge receipt of a message from a sending communication node, including the receiving node embedding the acknowledgement in a synchronization message which the receiving node produces for sending to the sending node, and the receiving node transmitting the synchronization message to the sending node. Related apparatus and methods are also described.

## Description

### FIELD AND BACKGROUND OF THE INVENTION

The present invention, in some embodiments thereof, relates to a bi-directional communication system, and more particularly, but not exclusively, to a communication system with a star topology having central nodes and a plurality of outlying nodes, and even more particularly, but not exclusively, to a low power wireless system with star topology.

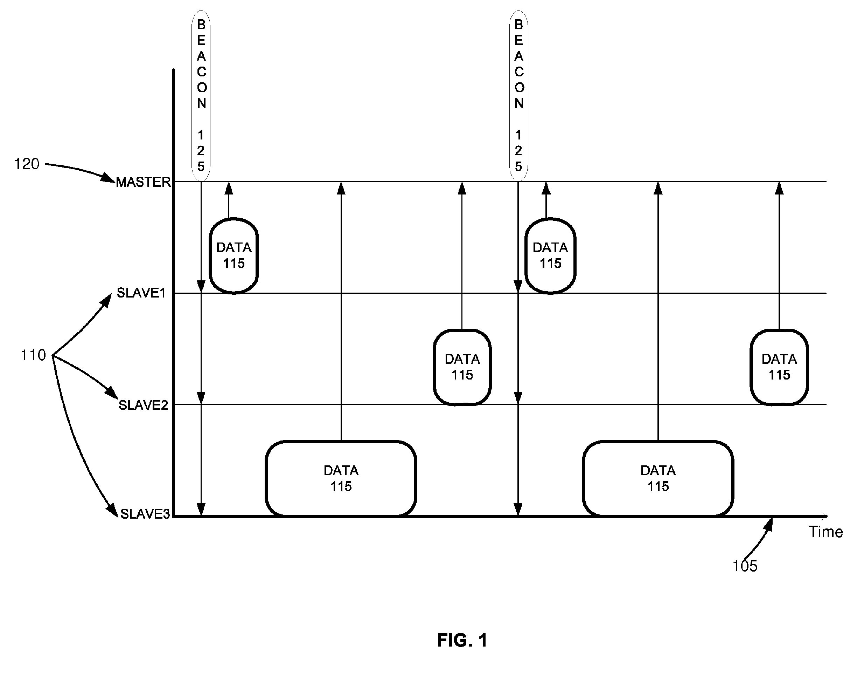

Reference is now made to FIG. 1, which is a simplified drawing of a timeline 105 in a non-limiting example of a prior art communication system which can benefit from the present invention.

The communication system of FIG. 1 is a low power wireless system with star topology, where slave nodes 110 send data 115 to a master node 120.

The master node 120 typically broadcasts beacon signals 125, also termed synchronization signals, on which the slave nodes 110 synchronize. Once synchronized on the beacon signals 125, the slave nodes 110 optionally transmit the data 115 to the master node 120 on predefined time slots following the beacon signals 125.

FIG. 1 illustrates two cycles of beacon signals 125 and data 115.

For every data 115 sent by a slave node 110, the master node 120 needs to send an acknowledgement to the slave node 110 that the data 115 arrived properly.

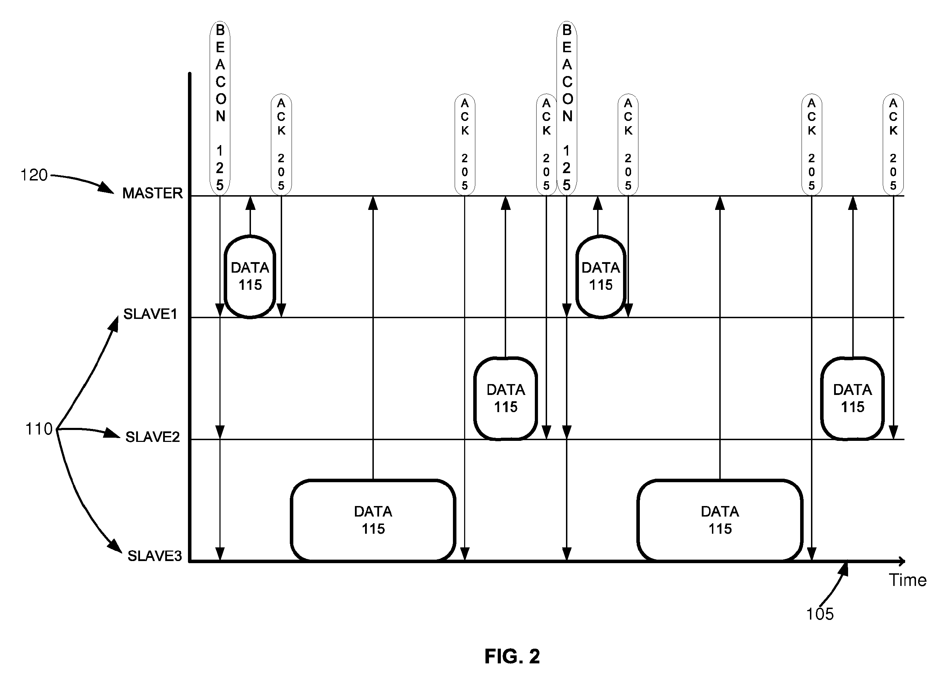

Reference is now additionally made to FIG. 2, which is a simplified drawing of the timeline 105 of FIG. 1, with acknowledgement signals added, in the prior art communication system of FIG. 1.

Typically, the master node 120 sends an acknowledgement signal 205 to each slave node 110 subsequent to receiving the data 115, and in addition to sending the beacon signals 125.

### Background art includes:

US Patent No. 6,717,926 to Deboille et al;
US Published Patent Application No. 2003/0137970 of Odman;
US Published Patent Application No. 2004/0082294 of Ekl et al;
US Published Patent Application No. 2008/0069118 of Monier;
US Published Patent Application No. 2008/0224889 of Wyk et al; and
US Published Patent Application No. 2009/004448 of Boariu et al.

### SUMMARY OF THE INVENTION

The present invention, in some embodiments thereof, relates to a method for saving overhead in networks in which some nodes, hereby named slave nodes, transmit data to a node, hereby named master node, and the master node broadcasts other signals, for example maintenance signals such as synchronization (sync) signals, to the slave nodes. In such networks overhead is saved by the master node sending acknowledgement signals (ack) to the slave nodes packaged within the sync signals. Overhead is saved because of several reasons, including that the ack signals do not incur "wrapper" overhead, sharing the "wrapper" overhead with the sync signals; and that the ack signals do not require their own time slots, sharing the time slot of the sync signals. In all, a smaller number of messages are sent over the communication channel or channels, lowering overhead.

In general, the term master node and the term slave node, imply a master slave relationship. The terms "master" and "master node" are used throughout the present specification and claims to stand for a communication node which receives a message and optionally sends an acknowledgement message, and no implication of participation in a master-slave relationship is intended. The terms "slave" and "slave node" are used throughout the present specification and claims to stand for a communication node which sent a message and waits to receive an acknowledgement message, and no implication of participation in a master-slave relationship is intended.

The terms "message" and "signal", in all their grammatical forms, are used interchangeably throughout the present specification and claims.

According to an aspect of some embodiments of the present invention there is provided , in a communication system with receipt acknowledgements, a method for a receiving communication node to acknowledge receipt of a message from a sending communication node, including the receiving node embedding the acknowledgement in a message which the receiving node produces for a purpose which is more than just acknowledgement of receipt of the message, and the receiving node transmitting the message.

According to some embodiments of the invention, the message in which the receiving node packages the acknowledgement is the first such message the receiving node produces for a purpose other than acknowledgement.

According to some embodiments of the invention, the message in which the receiving node packages the acknowledgement is later than the first such message which the receiving node produces for a purpose other than acknowledgement.

According to some embodiments of the invention, the acknowledgement is packaged in an acknowledgement field within a payload portion of the message.

According to some embodiments of the invention, the acknowledgement is packaged in an acknowledgement field within a header portion of the message.

According to some embodiments of the invention, the receiving node packages a plurality of acknowledgements in the message.

According to some embodiments of the invention, the message in which the receiving node packages the acknowledgement is a synchronization message.

According to some embodiments of the invention, the receiving node packages a plurality of acknowledgements in the message.

According to some embodiments of the invention, the plurality of acknowledgements are broadcast to a plurality of sending nodes.

According to some embodiments of the invention, the plurality of acknowledgements are arranged as an ack map.

According to some embodiments of the invention, the sending node extends its wait for the acknowledgement beyond a wait for an acknowledgement according to a protocol which sends acknowledgements in separate messages.

According to some embodiments of the invention, the sending node waits for an acknowledgement message at least until the sending node receives a first message from the receiving node.

According to some embodiments of the invention, the sending node waits for an acknowledgement message at least until the sending node receives a synchronization message from the receiving node.

According to an aspect of some embodiments of the present invention there is provided a communication node including a message receiver for receiving messages, an acknowledgement generator for producing acknowledgements to at least some of the received messages, a message generator for producing messages for transmission, in which the receiving communication node embeds at least one of the acknowledgements in a message for transmission which the message generator produces for a purpose which is other than just acknowledgement.

According to some embodiments of the invention, producing the acknowledgement is triggered by the message receiver receiving a message.

According to some embodiments of the invention, producing messages by the message generator occurs independently of the message receiver receiving a message.

According to some embodiments of the invention, producing the message for a purpose which is other than just acknowledgement is triggered by a timer.

According to some embodiments of the invention, the message which the message generator produces for a purpose which is other than just acknowledgement is a synchronization message.

According to an aspect of some embodiments of the present invention there is provided a computer-readable storage medium containing a set of instructions for implementing the above methods.

According to an aspect of some embodiments of the present invention there is provided, in a communication system with synchronization messages, a method for a receiving communication node to acknowledge receipt of a message from a sending communication node, including the receiving node embedding the acknowledgement in a synchronization message which the receiving node produces for sending to the sending node, and the receiving node transmitting the synchronization message to the sending node.

According to some embodiments of the invention, the synchronization message is produced for broadcast, and the transmitting includes broadcasting.

According to an aspect of some embodiments of the present invention there is provided a communication system implementing the above method.

According to an aspect of some embodiments of the present invention there is provided a computer-readable storage medium containing a set of instructions for implementing the above method.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Fig. 1 is a simplified drawing of a timeline in a non-limiting example of a prior art communication system which can benefit from the present invention;
Fig. 2 is a simplified drawing of the timeline of FIG. 1, with acknowledgement signals added, in the prior art communication system of FIG. 1;
Fig. 3A is a simplified drawing of a timeline in a communication system constructed and operational according to a non-limiting example of the invention;
Fig. 3B is a simplified drawing of fields in a first example communication packet without additional acknowledgement fields, and fields in a second example communication packet constructed and operational according to a non-limiting example of the invention, which includes additional acknowledgement fields;
Fig. 3C is a simplified block diagram of a communication node constructed and operational according to a non-limiting example of the invention;
Fig. 4 is a simplified drawing of a timeline in a communication system constructed and operational according to an alternative non-limiting example of the invention; and
Fig. 5 is a simplified drawing of a timeline in a communication system constructed and operational according to yet another alternative non-limiting example of the invention.

### DESCRIPTION OF SPECIFIC EMBODIMENTS OF THE INVENTION

The present invention, in some embodiments thereof, relates to a bi-directional communication system, and more particularly, but not exclusively, to a communication system with a star topology having central nodes and a plurality of outlying nodes, and even more particularly, but not exclusively, to a low power wireless system with star topology.

The present invention, in some embodiments thereof, relates to a method for saving overhead in networks in which slave nodes transmit data to a master node, and the master node broadcasts maintenance signals, such as synchronization (sync) signals, to the slave nodes.

The master node optionally sends an acknowledgement (ack) message to the slave modes, acknowledging receipt of the data.

It is noted that in general, what is referred to herein as a master node is a communication node which: receives a message; needs to acknowledge receiving the message; and is capable of broadcasting to the slave nodes. In such a generalization, the master node is a receiving node, which receives data and broadcasts acks.

It is noted that in general, what is referred to herein as a slave node is a communication node which: sends a message; is capable of listening for and receiving acknowledgement of receiving the message; and is capable of listening to and receiving broadcasts from the master node. In such a generalization, the slave node is a sending node, which sends data and awaits acks.

In some embodiments of the invention, the master node packages the ack in some other message which the master node needs to broadcast in any case. The master node produces a shared message. The shared message incurs less overhead , for both the ack (or acks) and the other message, so overhead is saved.

In some embodiments, the master node sends acks in shared messages to nodes which are enabled to receive acks in shared messages, and sends acks in regular ack messages, according to a different protocol, to nodes which are NOT enabled to receive acks in shared messages.

In some embodiments the master node keeps a list of which nodes are enabled to receive acks in shared messages.

In some embodiments, if the master node receives re-sends of data from nodes to which acks were sent in shared messages, the master node subsequently sends acks to those nodes in regular ack messages.

In some embodiments of the invention, the master node packages the ack in the first such other message which the master node broadcasts. The first such message may be a sync message, as described above, or the first such message may be some other type of broadcast message.

In some embodiments of the invention, the master node packages the ack in the a later message than the first such other message. By way of a non-limiting example, the master node may defer broadcasting the ack until the master node actually broadcasts a sync. By way of another non-limiting example, the master node may defer broadcasting the ack until it broadcasts another message, which is not a sync.

In some embodiments of the invention, since ack signals may arrive later than the first message broadcast by the master node, the slave node extends its wait for an ack.

In some embodiments of the invention, if a slave node does not receive an ack to a sent message when it receives a next sync message, the slave node retransmits the sent message.

It is noted that when acks are sent packaged in sync messages, in embodiments of the present invention, the slave node knows when to expect the ack message. In such embodiments, the slave node does not need to continuously receive communications, only when the next sync message is expected.

In some embodiments of the invention the extension is until a subsequent sync message. In some embodiments of the invention the extension is for a specified limited time. In some embodiments of the invention the extension is for a specified number of broadcasts from the master node. In some embodiments the slave nodes wait for as long as a wait for an acknowledgement according to a protocol which sends acknowledgements in separate messages. In some embodiments the extension is beyond a wait for an acknowledgement according to a protocol which sends acknowledgements in separate messages.

In some embodiments of the invention, the master node packages more than one ack in the shared message.

In some embodiments of the invention, the master node limits the number of acks packaged in the shared message so the shared message doesn't grow beyond a specified limit. Other acks are optionally sent as separate acks, and/or deferred until a next shared message.

Before explaining at least one embodiment of the invention in detail, it is to be understood that the invention is not necessarily limited in its application to the details of construction and the arrangement of the components and/or methods set forth in the following description and/or illustrated in the drawings and/or the examples. The invention is capable of other embodiments or of being practiced or carried out in various ways.

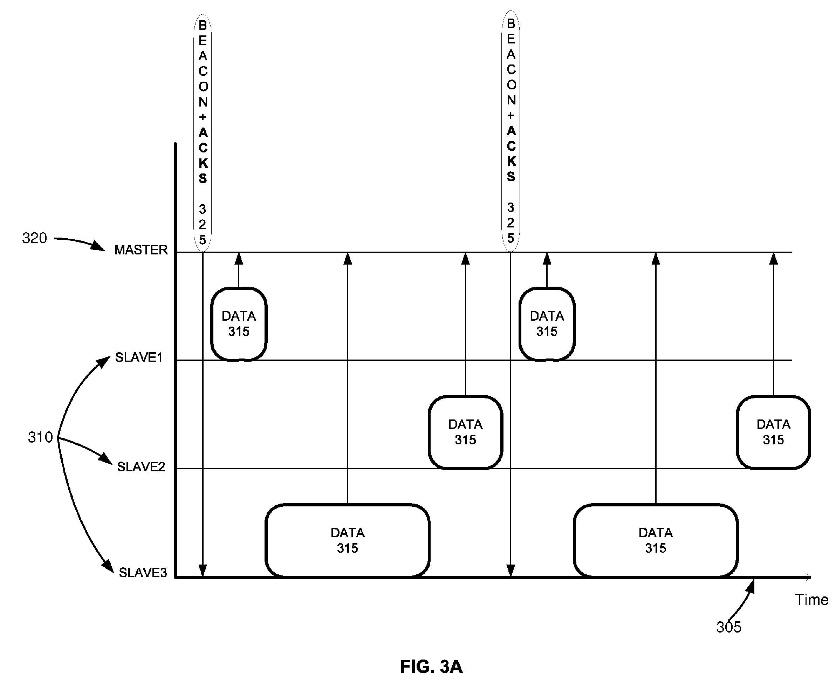

Reference is now made to FIG. 3A, which is a simplified drawing of a timeline 305 in a communication system constructed and operational according to a non-limiting example of the invention.

For every data 315 sent by a slave node 310, the master node 320 needs to send an acknowledgement to the slave node 310 that the data 315 arrived properly. Instead of sending an acknowledgement (ack) message immediately, the master node 120 packages the ack message in a subsequent beacon signal 325.

As may be seen, FIG. 3A is simpler. FIG. 3A includes less messages. The time line 305 includes less messages per unit time, implying that less time slots need to be allotted, although the time slot for the beacon signals 325 only may be somewhat larger than in prior art systems. The time between beacon signals 325 may optionally be allotted for sending data without allotting time for ack messages

The ack message shares overhead, such as message wrapper, of the beacon message, which is transmitted in any case, thus saving overhead of sending an acknowledgement as a stand alone message.

Generalizing on the above example embodiment, it is noted that in a communication network in which synchronization messages are sent frequently enough to provide "shared transportation" to ack messages, the method of the invention is likely to prove beneficial. By way of a non-limiting example, if a shortest data message is 2 milliseconds, and an ack is also 2 milliseconds, freeing up the 2 millisecond time slots of the ack messages can optionally allow a doubling of the number of data messages received between sync messages.

If a slave node may wait for an ack until a following synch message, the method enables saving overhead of sending the ack separately.

In fact, the saving in overhead is optionally enough to prompt extending the time a slave node waits for an ack before resending the data. In communication systems where bandwidth congestion is more of an issue than latency, using the method of the invention optionally increases latency, and decrease bandwidth congestion.

In some embodiments of the invention, those of the slave nodes which optionally sent data and expect an ack, now expect the ack to arrive within the next sync signal. The slave nodes now know the time when an ack is expected to arrive. In systems in which the slave nodes are not constantly in reception mode, it is advantageous for the slave nodes to be in reception mode for the beacon signals, receiving the ack together with the beacon signal if an ack is indeed sent.

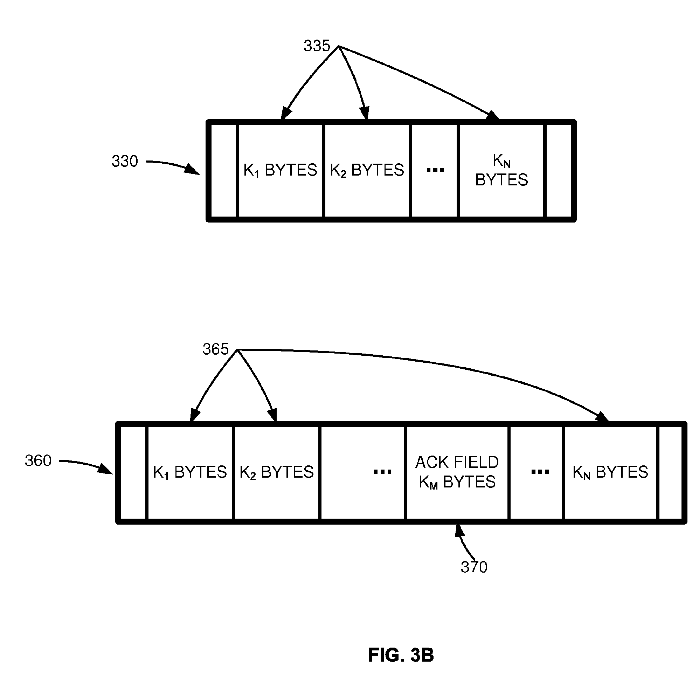

In some embodiments of the invention, the ack messages are not packaged within sync messages, but rather a number of ack messages are all packaged within one ack message, optionally in form of an ack map. The concept of an ack map is further described below, with reference to Fig. 3B.

Reference is now made to Fig. 3B, which is a simplified drawing of fields in a first example communication packet 330 without additional acknowledgement fields, and fields in a second example communication packet constructed and operational according to a non-limiting example of the invention, which includes additional acknowledgement fields.

The first example communication packet 330 contains, for example, N fields 335, each field I optionally having K*_{I}* bytes. It is noted that the fields may or may not be of equal size, and may or may not contain a whole number of bytes.

The second example communication packet 360 contains, for example, N fields 365, each field I optionally having K*_{I}* bytes, and one of the fields in the second example communication packet 360, for example the Mth field, is optionally an ACK field 370. The ACK field 370 optionally has K*_{M}* bytes.

In one example embodiment of the invention, the ACK field 370 includes an ack map. In the example embodiment the ack map optionally has at least 1 bit corresponding to each slave node, in some known order, and the ack bit is turned "on" or "off" according to whether an ack is to be sent to a corresponding slave node. In some embodiments, the ack map has more than one bit corresponding to each slave node, and optionally more information than just one bit is sent in an ack to each of the slave nodes.

In some embodiments of the invention, the ack map includes one bit per slave node.

In some embodiments of the invention the ack field 370 includes a list of slave node IDs, one ID for each slave node which is being ack'ed.

In some embodiments of the invention, the ack map includes one bit per time slot. A slave node receives an ack to a data message sent in a time slot N if the ack map includes a bit turned "on" in position N in the ack map.

In some embodiments of the invention, the ack map includes a bit turned "on" corresponding to each time slot in which the master node received a data message, and the ack field 370 also includes a list of slave node IDs, and/or data message IDs, to indicate which data messages are being ack'ed. The above embodiments are especially useful especially if there is a likelihood that more than one slave node try to send a data message in a time slot. When it is possible that more than one slave node try to send a data message in one time slot, there may be a need to optionally identify which of the data messages is being ack'ed by the master node. The "on" bit appears to indicate an ack to the more than one slave nodes, and the slave node IDs, and/or the data message IDs, disambiguate to which slave node or data message the ack is intended.

In some embodiments of the invention, optionally when more than one data message per slave may be sent between sync signals, the ack field includes a table of slave node IDs and ack data, one row for each data message which is being ack'ed. The ack data may optionally be a data message identifier.

In the embodiments where the ACK field 370 includes an ack map, the ack map should enable managing acks for all the received data messages. How many such messages may be managed?

In an example communication system according to prior art, when acks are sent in their own packets, one non-limiting example of a way to estimate a maximum number of messages is to divide the time between two synchronization messages into slots, with the length of each slot optionally defined according to the length of the shortest possible data transmission in the system. By way of a non-limiting example, there may be 40ms between sync messages, and the shortest transmission may be 2ms, allowing 20 time slots between 2 sync messages. In such a case the communication system supports about 10 time slots for receiving data from slave nodes and about 10 time slots for sending acks to slave nodes. In such a case about 10 data messages may be managed between 2 sync messages.

In a system using an example embodiment of the present invention, the 20 time slots support receiving 20 data messages between 2 sync messages, double the previous number, and the acks are optionally sent in the synchronization message. An ack map of 3 bytes would suffice to support sending acks to 20 data messages sent in 20 different time slots, since 3 bytes contain 24 bits, of which 20 can correspond to each of the 20 time slots. Adding 3 bytes to a synchronization message does not substantially increase the size of a synchronization message.

It is noted that a communication system constructed and operating according to an embodiment of the present invention can easily support more than 10 data messages between synchronization messages, optionally using one byte, or two bytes, or a small number of bytes, for each additional slave node, rather than a full communication packet for each slave node.

It is noted that the embodiment of FIG. 3B seems to imply that the ack field is included in a payload portion of the message.

In some embodiments of the invention the ack field is included in a message header.

In some embodiments of the invention the ack field is included in a message tail.

It is noted that a slave node may send data to a master node more often than a period between two adjacent sync messages.

When not using an embodiment of the present invention, the master node should send an ack for each data message, and the master node should usually do so before the slave node sends an additional data message, so the slave node knows to which data message the ack message corresponds.

When using an embodiment of the present invention, the slave node optionally sends a data message ID together with the data message, and the master node can optionally send more than one ack to different data messages from the same slave node.

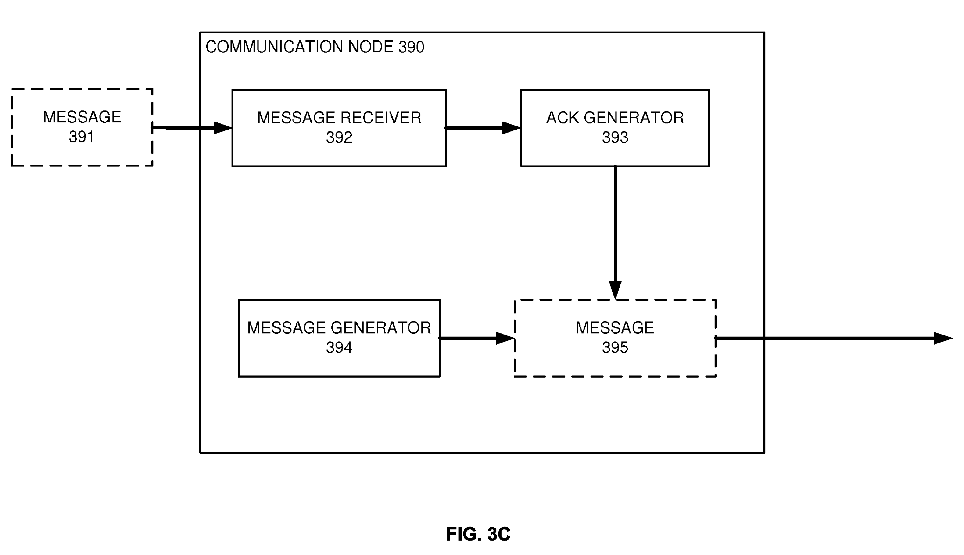

Reference is now made to Fig. 3C, which is a simplified block diagram of a communication node 390 constructed and operational according to a non-limiting example of the invention.

The communication node 390 includes a message receiver 392, for receiving messages 391. By way of a non-limiting example, the communication node 390 is a master node, and the received messages 391 are data messages. Receiving a message 391 by the message receiver 392 optionally causes the message receiver 392 to cause an ack generator (acknowledgment generator) to produce an ack (acknowledgement).

The communication node 390 also optionally includes a message generator 394, which optionally produces various types of messages 395, some of which are not acknowledgement messages, that is, some of which are produced for purposes other than sending an ack to a received message 391. By way of a non-limiting example, the messages 395 produced by the message generator 394 may be synchronization messages and/or other types of broadcast messages.

The communication node 390 optionally embeds the ack in the message 395, adding the substance of the ack to a message which the message generator produces for a purpose which is other than just sending an ack.

In some embodiments of the invention, the ack generator 393 producing the acknowledgement is triggered by the message receiver 392 receiving the message 391.

In some embodiments of the invention producing messages by the message generator occurs independently of the message receiver 392 receiving a message 392.

In some embodiments of the invention producing the message 395 for a purpose which is other than just acknowledgement of receipt is triggered by a timer (not shown).

In some embodiments of the invention the message 395 which the message generator 394 produces for a purpose which is other than just acknowledgement is a synchronization message.

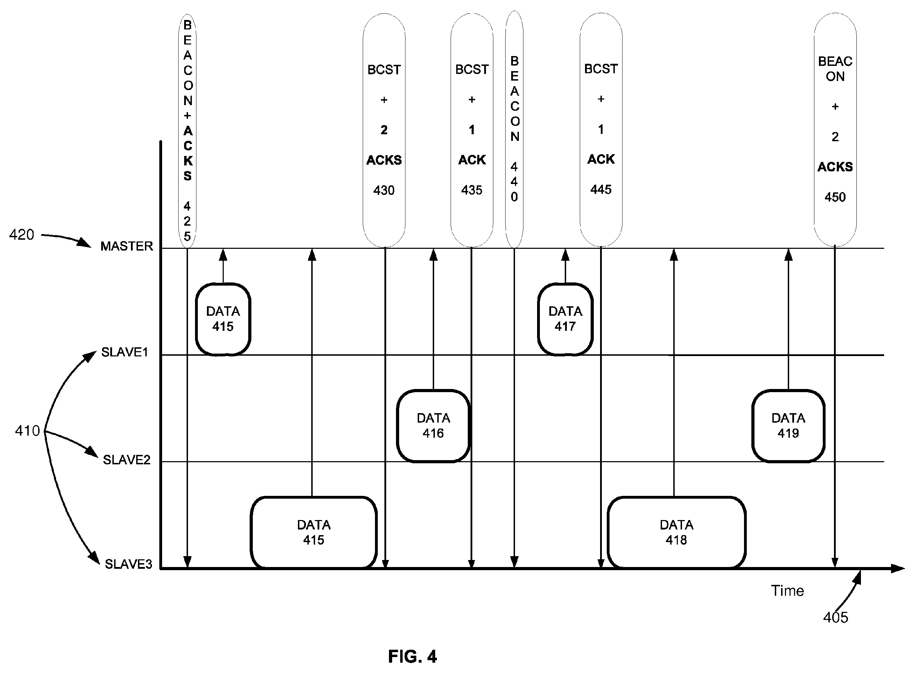

It is noted that more than one ack may be embedded in a message 395, as described elsewhere with reference to Figs. 3A, 3B, and 4.

Reference is now made to FIG. 4, which is a simplified drawing of a timeline 405 in a communication system constructed and operational according to an alternative non-limiting example of the invention.

FIG. 4 shows several exemplary options which may be utilized by the master node for sharing overhead of an ack message and another message.

Data 415 is sent by slave nodes 410 to a master node 420, and the master node 420 needs to send an ack to the slave nodes 410 when data messages arrive and are properly received.

Fig. 4 depicts a beacon message 425 which optionally includes some acks to data messages received earlier in the timeline 405.

Later along the timeline 405 the master node 420 receives some data messages, for example two data messages 415. The master node 420 optionally needs to send a broadcast message 430 to the slave nodes, and packages 2 acks within the broadcast message 430.

Still later along the timeline 405 the master node 420 receives another data message 416. The master node 420 optionally needs to send a broadcast message 435 to the slave nodes, and packages an ack within the broadcast message 435.

Still later along the timeline 405 the master node 420 broadcasts a beacon message 440 in which there are no acks packaged, since all previous data messages have already been ack'ed.

Still later along the timeline 405 the master node 420 receives another data message 417. The master node 420 optionally needs to send a broadcast message 445 to the slave nodes, and packages an ack within the broadcast message 445.

Still later along the timeline 405 the master node 420 receives two more data messages 418. The master node 420 optionally does not need to send any more broadcast messages to the slave nodes, until a time comes for broadcasting a beacon 450. The master node 420 packages two acks within the beacon message 450.

The example embodiment of FIG. 4 sends acks in a shorter time than the example embodiment of FIG. 3A, yet still saves overhead by packaging the acks within shared broadcast messages. FIG. 4 depicts more messages than FIG. 3A, yet the messages are all messages which would be sent regardless of the need to send acks.

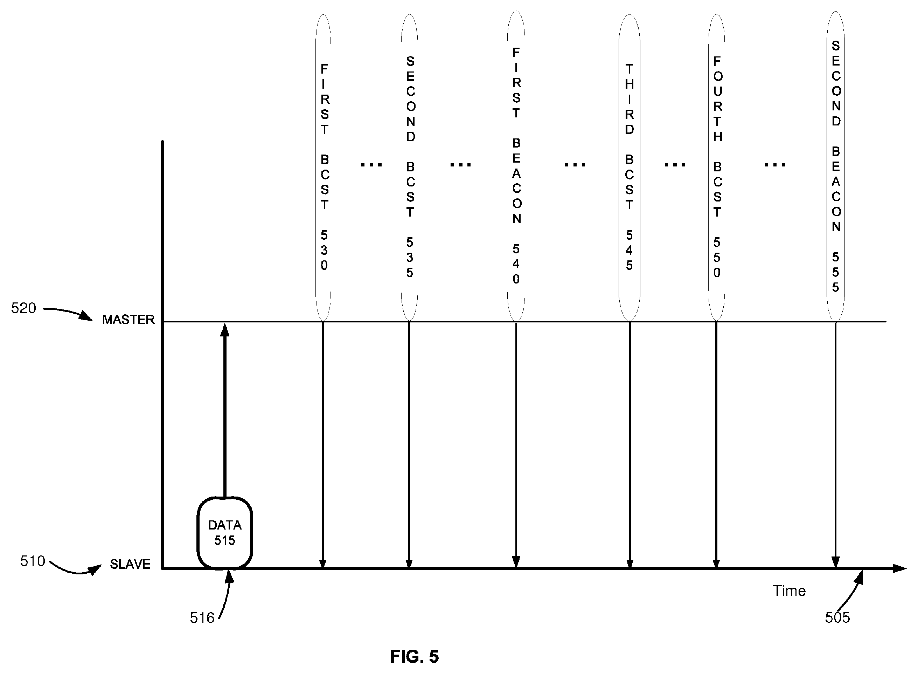

Reference is now made to FIG. 5, which is a simplified drawing of a timeline 505 in a communication system constructed and operational according to yet another alternative non-limiting example of the invention.
FIG. 5 depicts one master node 520 and one slave node 510, for purpose of simplicity of the explanation. FIG. 5 is not intended to limit the embodiment to one slave node 510, only that FIG. 5 not fill up with lines beyond comprehension.
FIG. 5 shows several exemplary options which may be utilized by the master node for sharing overhead of an ack message and another message.
FIG. 5 depicts the slave node 510 transmitting data 515 to the master node 520, at some time 516.

The master node 520 receives the data 515, and optionally broadcasts an ack message (not shown) packaged together with a first broadcast 530.

If for some reason the master node 520 did not broadcast the ack as a shared message in the first broadcast 530, the master node 520 may optionally broadcast the ack message (not shown) packaged together with a later, second broadcast 535.

If for some reason the master node 520 did not broadcast the ack in the second broadcast 535, the master node 520 may optionally broadcast the ack message (not shown) packaged together with a first beacon message 540. In some example communication systems a beacon message occurs every so often. The beacon message, in those communication systems, is a broadcast message which acts as a limit on the duration of the period of time during which a broadcast may occur and the master node 520 may share sending the ack message (not shown).

FIG. 5 is not meant to depict the master node 520 constrained only to two broadcasts 530 535 before broadcasting the first beacon 540. Rather it is meant that any number of broadcast messages such as the first broadcast message 530 and the second broadcast message 535 may occur before s first beacon message 540, which is itself a type of broadcast message.

If for some reason the master node 520 did not broadcast the ack in the first beacon 540, the master node 520 may optionally broadcast the ack message (not shown) packaged together with a third broadcast message 545, a fourth broadcast message 550, or even a second beacon 555. Again, FIG. 5 is not meant to depict the master node 520 constrained only to certain broadcasts 545 550 after broadcasting the first beacon 540. Rather it is meant that any number of broadcast messages such as the third broadcast message 545 and the fourth broadcast message 550 may occur after the first beacon message 540, and/or the master node 520 may broadcast the ack packaged with an even later, second beacon 555, or even later than the second beacon 555.

It is noted that some embodiments of the method of the present invention are useful in cases where one or more first communication nodes transmit data to a second communication node, and the second communication node broadcasts messages to the first nodes.

The above examples were described such that the second communication node broadcast a message to the first communication node every limited period of time. A non-limiting example of such a message was taken to be a sync message, also termed a beacon message. Other such messages, by way of a non-limiting example, may be data packets from the second communication node to the first communication node, and/or a broadcast from the second communication node to one or more nodes including the first communication node.

The types of communication systems in which the method of the invention applies include communication networks, such as wired networks and wireless networks, optical networks and radio networks, low-power networks and high-power networks, and so on.

It is noted that by combining acknowledgements within communication packets used for other purposes, complexity may sometimes be added to a communication system.

The added complexity comes from optionally adding fields to, for example, a beacon (or sync) communication packet, such the beacon packet is longer and may require more deciphering when received. Also, because the combined packet is longer, the packet may be more prone to errors, although the additional length is typically negligible when considering, for example, a beacon packet length.

Theoretical calculations and experimental results show that in typical scenarios the overhead saved enables a communication system to communicate more data messages and acks than in prior art communication systems.

It is expected that during the life of a patent maturing from this application many relevant types of broadcast messages, beacon messages, and sync messages will be developed and the scope of the terms broadcast message, beacon message, and sync message is intended to include all such new technologies *a priori.*

The terms "comprising", "including", "having" and their conjugates mean "including but not limited to".

As used herein, the singular form "a", "an" and "the" include plural references unless the context clearly dictates otherwise. For example, the term "a unit" or "at least one unit" may include a plurality of units, including combinations thereof.

The words "example" and "exemplary" are used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

## Claims

1. In a communication system with receipt acknowledgements, a method for a receiving communication node to acknowledge receipt of a message from a sending communication node, comprising:
the receiving node embedding the acknowledgement in a message which the receiving node produces for a purpose which is more than just acknowledgement of receipt of the message; and
the receiving node transmitting the message.

2. The method of claim 1 in which the message in which the receiving node embeds the acknowledgement in a first such message the receiving node produces for a purpose other than acknowledgement.

3. The method of claim 1 in which the message in which the receiving node embeds the acknowledgement in a message which is later than the first such message which the receiving node produces for a purpose other than acknowledgement.

4. The method of any one of claims 2 and 3 in which the receiving node embeds a plurality of acknowledgements in the message.

5. The method of claim 4 in which the plurality of acknowledgements are broadcast to a plurality of sending nodes.

6. The method of any one of claims 1 to 5 in which the message in which the receiving node embeds the acknowledgement is a synchronization message.

7. The method of claim 5 in which the plurality of acknowledgements are arranged as an ack map.

8. The method of claim 1 in which the sending node waits for an acknowledgement message at least until the sending node receives a first message from the receiving node.

9. The method of claim 1 in which the sending node waits for an acknowledgement message at least until the sending node receives a synchronization message from the receiving node.

10. A communication node comprising:
a message receiver for receiving messages;
an acknowledgement generator for producing acknowledgements to at least some of the received messages;
a message generator for producing messages for transmission;
in which the receiving communication node embeds at least one of the acknowledgements in a message for transmission which the message generator produces for a purpose which is other than just acknowledgement.

11. The communication node of claim 10 in which producing the acknowledgement is triggered by the message receiver receiving a message.

12. The communication node of any one of claims 10 and 11 in which producing messages by the message generator occurs independently of the message receiver receiving a message.

13. The communication node of any one of claims 10 to 12 in which producing the message for a purpose which is other than just acknowledgement is triggered by a timer.

14. The communication node of claim 13 in which the message which the message generator produces for a purpose which is other than just acknowledgement is a synchronization message.

15. In a communication system with synchronization messages, a method for a receiving communication node to acknowledge receipt of a message from a sending communication node, comprising:
the receiving node embedding the acknowledgement in a synchronization message which the receiving node produces for sending to the sending node; and
the receiving node transmitting the synchronization message to the sending node.

16. The method of claim 15 in which the synchronization message is produced for broadcast, and the transmitting comprises broadcasting.
